# EUROPÄISCHE PATENTSCHRIFT

(11) **EP 1 256 466 B1**
(45) Veröffentlichungstag und Bekanntmachung des Hinweises auf die Patenterteilung: **07.03.2007**
(21) Anmeldenummer: 02008370.5
(22) Anmeldetag: 12.04.2002
(51) Int. Cl.: B60G 17/04

(54) **Verfahren zur Regelung des Speicherdruckes in einer geschlossenen Niveauregelanlage**
Method for controlling the accumulator pressure in a closed circuit levelling system
Méthode de contrôle de la pressioin dans le circuit fermé d'un correcteur de hauteur

(30) Priorität: 10.05.2001 DE 10122567
(43) Veröffentlichungstag der Anmeldung: 13.11.2002
(73) Patentinhaber: Continental Aktiengesellschaft, 30165 Hannover (DE)
(72) Erfinder: Oldenettel, Holger, 30900 Wedemark (DE)

(56) Entgegenhaltungen:
- EP-A- 1 078 784
- DE-C- 19 959 556
- US-A- 4 354 693

## Beschreibung

Die Erfindung betrifft ein Verfahren zur Regelung des Speicherdruckes des Druckluftspeichers einer geschlossenen Niveauregelanlage für ein Kraftfahrzeug, die folgende Bestandteile enthält:
- einen Kompressor,
- einen Druckluftspeicher, der mit Luft aus der Atmosphäre befüllbar und der in die Atmosphäre entleerbar ist,
- mindestens eine Luftfeder, wobei die Luftfeder über den Kompressor mit dem Druckluftspeicher derart in Verbindung steht, dass Druckluft aus der Luftfeder in den Druckluftspeicher und in die umgekehrte Richtung überführbar ist.

Eine derartige Niveauregelanlage ist beispielsweise aus der DE 199 59 556 C2 bekannt und ermöglicht es, den Fahrzeugaufbau eines Kraftfahrzeuges auf Normalniveau zu halten. Dazu wird aus dem Druckluftspeicher Druckluft in die Luftfedern der Niveauregelanlage überführt, um den Fahrzeugaufbau des Kraftfahrzeuges anzuheben oder es wird zur Absenkung des Fahrzeugaufbaus Druckluft aus den Luftfedern über den Kompressor in den Druckluftspeicher überführt, wenn sich der Fahrzeugaufbau nicht mehr in dem vorgegebenen Normalniveau befindet. Der Speicherdruck des Druckluftspeichers muss innerhalb eines bestimmten Bereiches liegen, wenn sich der Fahrzeugaufbau auf dem vorgegebenen Normalniveau befindet, um einerseits ein schnelles Anheben des Fahrzeugaufbaus und andererseits ein schnelles Absenken des Fahrzeugaufbaus zu ermöglichen. Ist nämlich der Speicherdruck in dem Druckluftspeicher zu hoch, so ist zwar ein schnelles Anheben des Fahrzeugaufbaus möglich, nicht jedoch ein schnelles Absenken des Fahrzeugaufbaus, da die Druckluft in diesem Fall aus den Luftfedern gegen den hohen Speicherdruck in den Druckluftspeicher überführt werden muss. Entsprechend gilt, dass bei einem zu niedrigen Speicherdruck in dem Druckluftspeicher zwar ein schnelles Absenken des Fahrzeugaufbaus möglich ist, nicht jedoch ein schnelles Anheben des Fahrzeugaufbaus.

Der Speicherdruck des Druckluftspeichers variiert wegen unterschiedlicher Beladungszustände und unterschiedlicher Niveaueinstellungen, die vom Fahrer oder durch die Regelung der Niveauregelanlage vorgegeben werden (z. B. um einem Geländefahrzeug mehr Bodenfreiheit zu verschaffen). Dies kann dazu führen, dass der Speicherdruck aufgrund des momentanen Beladungszustandes und/oder der momentanen Niveaueinstellung des Fahrzeugaufbaus außerhalb des gewünschten Bereiches liegt, obwohl er innerhalb dieses Bereiches liegen würde, wenn sich der Fahrzeugaufbau in dem vorgegebenen Normalzustand befände. Wird zu einem derartigen Zeitpunkt der Speicherdruck bestimmt, so würde dies zu einem Auffüllen des Druckluftspeichers mit Luft aus der Atmosphäre oder zu einem Entleeren des Druckluftspeichers in die Atmosphäre führen, obwohl dies eigentlich nicht geschehen dürfte. Vielmehr sollen in dem Druckluftspeicher durch Auffüllen oder Entleeren nur Leckageverluste oder Speicherdruckschwankungen ausgeglichen werden, die aufgrund starker Temperaturschwankungen zustande kommen. Das Problem könnte man dadurch lösen, dass man den Speicherdruck nur dann bestimmt, wenn sich der Fahrzeugaufbau im Normalniveau befindet, jedoch kommt dies häufig über einen langen Zeitraum nicht vor.

Der Erfindung liegt die Aufgabe zugrunde, ein Verfahren zur Regelung des Speicherdruckes des Druckluftspeichers einer geschlossenen Niveauregelanlage zu schaffen, durch das weitestgehend sichergestellt ist, dass sich der Speicherdruck in einem bestimmten Bereich befindet und der Druckluftspeicher nicht unnötig mit Druckluft aus der Atmosphäre aufgefüllt bzw. in diese entleert wird. Vorzugsweise soll sich der Speicherdruck in einem bestimmten Zustand des Kraftfahrzeuges in einem bestimmten Bereich, um ein schnelles Anheben und Absenken des Fahrzeugaufbaus zu gewährleisten.

Gemäß den kennzeichnenden Merkmalen des Anspruchs 1 wird die Aufgabe dadurch gelöst, dass der Speicherdruck des Druckluftspeichers indirekt über die Luftmenge in der Niveauregelanlage geregelt wird, indem die Luftmenge bestimmt wird und
- der Druckluftspeicher mit Luft aus der Atmosphäre aufgefüllt wird, wenn die Luftmenge unterhalb einer unteren Grenze liegt und
- der Druckluftspeicher in die Atmosphäre entleert wird, wenn die Luftmenge oberhalb einer oberen Grenze liegt, wobei die Regelung derart vorgenommen wird, dass die Luftmenge nach dem Auffüllen bzw. Entleeren in einem Arbeitsbereich zwischen der unteren und der oberen Grenze liegt.

Der Grundgedanke der Erfindung ist darin zu sehen, dass die Luftmenge möglichst immer in einem bestimmten Arbeitsbereich gehalten wird und infolgedessen der Speicherdruck in einem bestimmten Zustand des Kraftfahrzeuges auch in einem bestimmten Bereich liegt. Der Arbeitsbereich für die Luftmenge wird vorzugsweise so gewählt, dass in einem bestimmten Normalzustand des Kraftfahrzeuges der Speicherdruck in einem Bereich liegt, in dem einerseits ein schnelles Anheben und andererseits ein schnelles Absenken des Fahrzeugaufbaus möglich ist.

Ein mit der Erfindung erzielter Vorteil ist insbesondere darin zu sehen, dass das Verfahren zur Regelung des Speicherdruckes zu einem beliebigen Zeitpunkt und in einem beliebigen Zustand des Kraftfahrzeuges durchgeführt werden kann, da bei dem Verfahren lediglich (die vom momentanen Zustand des Kraftfahrzeuges unabhängige) Luftmenge in der Niveauregelanlage bestimmt wird und überprüft wird, ob sich diese in einem bestimmten Arbeitsbereich befindet. Ein weiterer Vorteil der Erfindung ist darin zu sehen, dass der Speicherdruck durch Befüllen oder Entleeren des Druckluftspeichers nur noch dann angeglichen wird, wenn sich aufgrund von Leckage bzw. großen Temperaturschwankungen ergeben hat, dass die Luftmenge in der Niveauregelanlage außerhalb des Arbeitsbereiches (und infolgedessen der Speicherdruck außerhalb des gewünschten Bereiches) liegt. Der Kompressor wird zum Auffüllen des Druckluftspeichers also nur dann betätigt, wenn dies unbedingt notwendig ist, so dass sich die Kompressorlaufzeiten verkürzt und die Kompressorlebensdauer verlängert. Ein weiterer Vorteil der Erfindung ist schließlich darin zu sehen, dass die Luftmenge in der Niveauregelanlage auf einfache Art und Weise bestimmbar ist.

Zur Durchführung des Verfahrens kann die Luftmenge in sämtlichen Bestandteilen der Niveauregelanlage, also in den Luftfedern, dem Druckluftspeicher, dem Kompressor, dem Lufttrockner und den Druckluftleitungen bestimmt werden. Gemäß einer Weiterbildung der Erfindung nach Anspruch 2 wird die Luftmenge in der Niveauregelanlage jedoch aus der Summe der Luftmengen in den Luftfedern und der Luftmenge in dem Druckluftspeicher bestimmt. Hierbei wird davon ausgegangen, dass die Luftmenge in den anderen Bestandteilen der Niveauregelanlage gegenüber den genannten Bestandteilen vernachlässigt werden kann. Der Vorteil dieser Weiterbildung ist darin zu sehen, dass die Luftmenge in den Luftfedern und in dem Druckluftspeicher mit Hilfe der Höhensensoren der Niveauregelanlage und eines zentralen Drucksensors auf einfache Art und Weise bestimmt werden kann (näheres s. Figurenbeschreibung).

Gemäß einer Weiterbildung der Erfindung nach Anspruch 3 wird der Druckluftspeicher derart aufgefüllt oder entleert, dass die Luftmenge nach dem Auffüllen oder Entleeren zumindest nahe der Mitte des Arbeitsbereiches liegt (vorzugsweise entspricht die Luftmenge genau diesem Wert). Der Vorteil dieser Weiterbildung ist darin zu sehen, dass die Luftmenge in dem Druckluftspeicher eine größtmögliche Schwankungsbreite hat, bevor sie den Arbeitsbereich "verlässt" und die Luftmenge wieder nachgeregelt werden muss.

Eine Weiterbildung des Verfahrens nach Anspruch 4 ist dadurch gekennzeichnet, dass
- die Luftmenge in der Niveauregelanlage bestimmt wird
- die bestimmte Luftmenge von einer vorgegebenen Luftmenge, die innerhalb des Arbeitsbereiches liegt, abgezogen wird
- aus der Differenz eine Zeitspanne bestimmt wird, über die der Druckluftspeicher aufgefüllt oder entleert werden muss, um von der bestimmten Luftmenge zu der vorgegebenen Luftmenge zu kommen
- der Druckluftspeicher über die bestimmte Zeitspanne aufgefüllt oder entleert wird.

Der mit der Weiterbildung erzielte Vorteil ist darin zu sehen, dass der Kompressor zum Auffüllen des Druckluftspeichers nur einmal für die bestimmte Zeitspanne eingeschaltet zu werden braucht, bzw. dass das Ablassventil, über das die Druckluft aus dem Druckluftspeicher in die Atmosphäre strömt, nur einmal für die bestimmte Zeitspanne geöffnet zu werden braucht. Ein Nachmessen, ob die Luftmenge nach einer Kompressorlaufzeit bzw. einer Ablassventilöffnungszeit den gewünschten Wert erreicht hat, und ein erneutes Einschalten des Kompressors bzw. Umschalten des Ablassventiles erübrigt sich. Vorzugsweise wird zur Berechnung der Zeitspanne als vorgegebene Luftmenge der mittlere Luftmengenwert des Arbeitsbereiches zugrunde gelegt, um zusätzlich den im letzten Absatz genannten Vorteil zu erreichen.

Gemäß einer Weiterbildung der Erfindung nach Anspruch 5 wird der Arbeitsbereich so gewählt, dass die Luftmenge in der Niveauregelanlage auch bei Temperaturschwankungen im Laufe eines längeren Zeitraumes zumindest meistens innerhalb des Arbeitsbereiches liegt. Als Zeitraum kann beispielsweise die Länge eines Tages berücksichtigt werden. In diesem Fall kann der Arbeitsbereich z. B. dadurch festgelegt werden, dass die mittlere Luftmenge des Arbeitsbereiches bei 15° C eingenommen wird und die untere und obere Grenze des Arbeitsbereiches bei 15° C +/- 20° C eingenommen werden. Die Luftmenge verlässt dann in einem Temperaturbereich von -5° C bis 35° C den Arbeitsbereich nicht (abhängig von der Jahreszeit oder der Region, in der das Kraftfahrzeug gebaut wird, können auch andere Temperaturen festgelegt werden). Der Vorteil der Weiterbildung ist darin zu sehen, dass die Luftmenge aufgrund von Temperaturschwankungen über den genannten Zeitraum den Arbeitsbereich nicht verlässt und somit innerhalb des Zeitraumes eine Nachregelung der Luftmenge aufgrund der Temperaturschwankungen nicht notwendig ist.

Gemäß einer Weiterbildung der Erfindung nach Anspruch 6 wird die Luftmenge in der Niveauregelanlage bei Inbetriebnahme (vorzugsweise bei jeder Inbetriebnahme) des Kraftfahrzeuges bestimmt. Ein Vorteil dieser Weiterbildung ist darin zu sehen, dass die Luftmenge vor Fahrtantritt des Kraftfahrzeuges noch ohne jegliche Gefährdung korrigiert werden kann. Ein weiterer Vorteil der Weiterbildung ist darin zu sehen, dass im Stillstand des Kraftfahrzeuges die Luftmenge in den Druckmittelkammern auf einfache Art und Weise genau gemessen werden kann, da keine dynamischen Einflüsse auf das Kraftfahrzeug und auf die Druckmittelkammern wirken.

Eine Weiterbildung der Erfindung nach Anspruch 7 ist dadurch gekennzeichnet, dass
- jeweils über einen längeren Zeitraum der arithmetrische Mittelwert aus den während des Zeitraumes bestimmten Luftmengen gebildet wird
- ein so bestimmter Mittelwert mit mindestens einem zuvor entsprechend bestimmten Mittelwert verglichen wird, und
- bei einem Sinken des Mittelwertes auf eine Leckage der Niveauregelanlage geschlossen wird.

Hierbei kann ein Zeitraum zugrunde gelegt werden, der zwischen 10 und 90 Tagen liegt. Wenn der Zeitraum also 10 Tage beträgt, wird während 10 aufeinander folgender Tage der arithmetische Mittelwert aus den in diesem Zeitraum gemessenen Luftmengen bestimmt und mit einem oder mehreren zuvor bestimmten Mittelwerten verglichen, um auf eine Leckage in der Niveauregelanlage zu schließen (Beispiel: es wird der Mittelwert im Zeitraum vom 01.01. bis zum 10.01., vom 02.01. bis zum 11.01., vom 03.01. bis zum 12.01. usw. bestimmt; wenn der zuletzt bestimmte Mittelwert gegenüber einem oder mehreren zuvor bestimmten Mittelwerten gesunken ist, wird auf eine Leckage in der Niveauregelanlage geschlossen). Der Vorteil der Weiterbildung ist darin zu sehen, dass durch die vorgenommene Mittelwertbildung - über einen längeren Zeitraum-Temperaturschwankungen, die Einflüsse auf die Luftmengenbestimmung haben, "geglättet" werden. Wenn auf eine Leckage in der Niveauregelanlage geschlossen wird, kann dies dem Kraftfahrzeugfahrer z. B. angezeigt und/oder in einen Fehlerspeicher des Kraftfahrzeuges eingeschrieben werden. Der Fehlerspeicher wird bei der nächsten Inspektion des Kraftfahrzeuges ausgelesen und die Leckage der Niveauregelanlage kann behoben werden.

Gemäß einer Weiterbildung der Erfindung nach Anspruch 8 wird der Mittelwert des Arbeitsbereiches ausgehend von einer bestimmten Umgebungstemperatur, einem bestimmten Ladungszustand, eines bestimmten Normalniveaus des Fahrzeugaufbaus und bestimmten Mindestregelzeiten für das Anheben bzw. Absenken des Fahrzeugaufbaus aus dem Normalniveau in ändere bestimmte Niveaus festgelegt. Der Arbeitsbereich für die Luftmenge wird ausgehend von diesem Mittelwert festgelegt. Als Umgebungstemperatur, Beladungszustand und Normalniveau werden hierbei Werte festgelegt, die das Kraftfahrzeug häufig einnimmt. Der Vorteil dieser Weiterbildung ist darin zu sehen, dass der Arbeitsbereich ausgehend von einem Normalzustand des Kraftfahrzeuges festgelegt wird, und dass ein schnelles Anheben und Absenken des Fahrzeugaufbaus aus dem Normalniveau in andere bestimmte Niveaus gewährleistet ist.

Ein Ausführungsbeispiel und weitere Vorteile der Erfindung werden im Zusammenhang mit den nachfolgenden Figuren erläutert, darin zeigt:
- Fig. 1: eine geschlossene Niveauregelanlage in schematischer Darstellung
- Fig. 2: ein Diagramm.

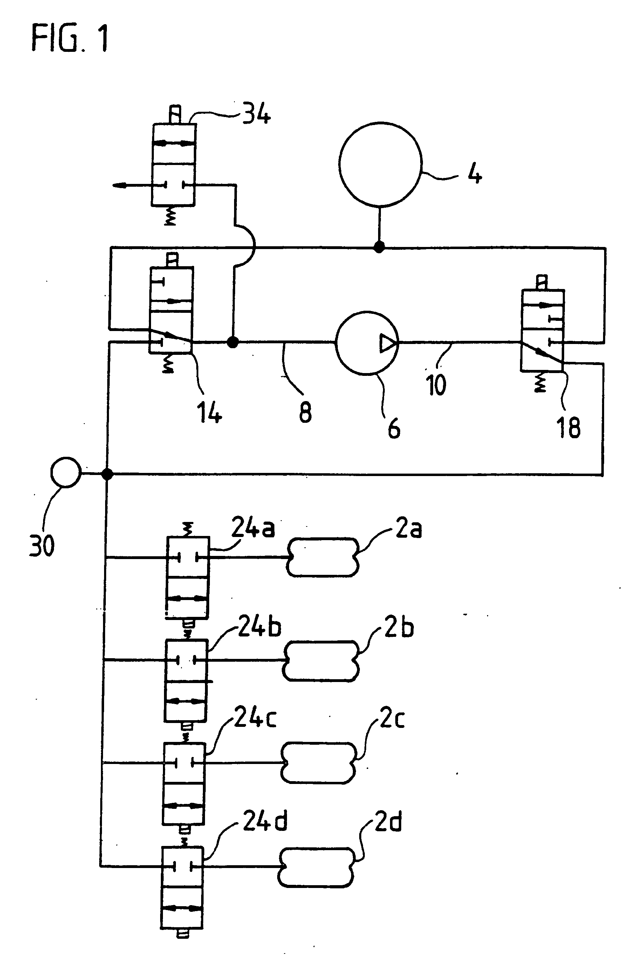

Figur 1 zeigt eine geschlossene Niveauregelanlage in schematischer Darstellung (ausführliche Ausführungen zu dem Aufbau und der Funktionsweise dieser Niveauregelanlage sind in der DE 199 59 556 C2 zu finden). Die Niveauregelanlage weist Luftfedern 2a bis 2d und einen Druckluftspeicher 4 auf. Ferner enthält die Niveauregelanlage einen Kompressor 6, der zumindest Druckluft von seinem Eingang 8 zu seinem Ausgang 10 befördern kann. Die genannten Bestandteile sind über Druckluftleitungen miteinander verbunden, in denen steuerbare Wegeventile 14, 18 und 24a - 24d liegen. Im Folgenden wird anhand der Luftfeder 2a erläutert, wie Druckluft von dem Druckluftspeicher 4 über den Kompressor 6 in die Luftfedern 2a bis 2d überführt werden kann. Zunächst wird von der (nicht gezeigten) Steuereinheit der Niveauregelanlage das steuerbare Wegeventil 24a angesteuert, so dass dieses von dem in der Figur 1 gezeigten ersten Schaltzustand in den zweiten Schaltzustand übergeht. Danach wird von der Steuereinheit der Kompressor 6 angesteuert, so dass dieser beginnt zu laufen. Aus dem Druckluftspeicher 4 wird dann über das steuerbare Wegeventil 14, den Kompressor 6, das steuerbare Wegeventil 18 und das steuerbare Wegeventil 24a Druckluft in die Luftfeder 2a überführt. Ist genügend Druckluft in die Luftfeder 2a überführt worden (hat der Fahrzeugaufbau im Bereich der Luftfeder 2a also das gewünschte Niveau eingenommen), wird von der Steuereinheit wiederum der Kompressor 6 angesteuert, so dass dieser aufhört zu laufen, und darüber hinaus das steuerbare Wegeventil 24a nicht mehr bestromt, so dass er wieder in den ersten Schaltzustand übergeht. Die Luftfedern 2b bis 2d können auf entsprechende Art und Weise mit Druckluft aus dem Druckluftspeicher 4 befüllt werden (hierbei ist auch ein gleichzeitiges Auffüllen von mehreren Luftfedern 2a bis 2d möglich).

Im Folgenden wird anhand der Luftfeder 2a beispielhaft erläutert, wie Druckluft aus den Luftfedern 2a bis 2d über den Kompressor 6 in den Druckluftspeicher 4 überführt werden kann: Zunächst werden von der Steuereinheit der Niveauregelanlage die elektrisch steuerbaren Wegeventile 14, 18 und 24a angesteuert, so dass diese von dem in der Figur 1 gezeigten ersten Schaltzustand in den zweiten Schaltzustand übergehen. Danach wird von der Steuereinheit der Kompressor 6 angesteuert, so dass dieser beginnt zu laufen. Aus der Luftfeder 2a wird dann Druckluft über das Wegeventil 24a, das Wegeventil 14, den Kompressor 6 und das Wegeventil 18 in den Druckluftspeicher 4 überführt. Wenn genügend Druckluft aus der Luftfeder 2a in den Druckluftspeicher 4 abgelassen worden ist (wenn der Fahrzeugaufbau im Bereich der Luftfeder 2a also das gewünschte Niveau eingenommen hat), wird von der Steuereinheit der Kompressor 6 angesteuert, so dass dieser aufhört zu laufen. Darüber hinaus werden die steuerbaren Wegeventile 14, 18 und 24a nicht mehr bestromt, so dass diese wieder in den ersten Schaltzustand übergehen. Auf entsprechende Art und Weise können die Luftfedern 2b bis 2d in den Druckluftspeicher 4 entleert werden (hierbei ist auch ein gleichzeitiges Entleeren von mehreren Luftfedern 2a bis 2d möglich).

Ein schnelles Anheben des Fahrzeugaufbaus aus einem vorgegebenen Normalniveau durch Befüllen der Luftfedern 2a bis 2d mit Druckluft aus dem Druckluftspeicher 4 kann nur gewährleistet werden, wenn der Speicherdruck in dem Druckluftspeicher 4 hoch genug ist. Andererseits kann ein schnelles Absenken des Fahrzeugaufbaus aus einem zu hohen Niveau in das Normalniveau durch Entlüften der Luftfedern 2a bis 2d in den Druckluftspeicher 4 nur dadurch gewährleistet werden, dass der Speicherdruck in dem Druckluftspeicher 4 nicht zu hoch ist. Um also einerseits ein Anheben des Fahrzeugaufbaus und ein Absenken des Fahrzeugaufbaus mit einer gewissen Mindestgeschwindigkeit zu gewährleisten, muss der Speicherdruck in dem Druckluftspeicher 4 in einem bestimmten Bereich liegen, wenn das Fahrzeug den Normalzustand einnimmt. Da sich das Kraftfahrzeug aufgrund unterschiedlicher Beladungszustände und unterschiedlicher Niveaueinstellungen häufig außerhalb des Normalzustandes befindet, lässt sich der Speicherdruck des Druckluftspeichers 4 im Normalzustand des Kraftfahrzeuges nicht ohne Weiteres feststellen. Erfindungsgemäß wird der Speicherdruck des Druckluftspeichers 4 deshalb indirekt über die Luftmenge in der Niveauregelanlage geregelt, indem diese Luftmenge bestimmt wird und-gegebenenfalls durch Auffüllen des Druckluftspeichers 4 mit Luft aus der Atmosphäre bzw. durch Entleeren des Druckluftspeichers 4 in die Atmosphäre - in einem bestimmten Arbeitsbereich gehalten wird (dieser Arbeitsbereich wird so gewählt, dass im Normalzusand des Kraftfahrzeuges der Speicherdruck in dem Druckluftspeicher 4 in dem gewünschten Bereich liegt).

Wenn der Druckluftspeicher 4 mit Druckluft aus der Atmosphäre aufgefüllt werden soll, werden von der Steuereinheit der Niveauregelanlage zunächst die steuerbaren Wegeventile 34 und 18 angesteuert, so dass diese von dem in der Figur 1 gezeigten ersten Schaltzustand in den zweiten Schaltzustand übergehen. Danach wird der Kompressor angesteuert, so dass dieser beginnt zu laufen. Aus der Atmosphäre wird dann über das Wegeventil 34, den Kompressor 6 und das Wegeventil 18 Luft in den Druckluftspeicher 4 überführt. Soll keine Luft mehr aus der Atmosphäre in den Druckluftspeicher 4 überführt werden, so werden die steuerbaren Wegeventile 34 und 18 von der Steuereinheit nicht mehr bestromt, so dass diese wieder in den ersten Schaltzustand übergehen. Darüber hinaus wird der Kompressor 6 nicht mehr angesteuert, so dass dieser aufhört zu laufen.

Zum Ablassen von Druckluft aus dem Druckluftspeicher 4 wird von der Steuereinheit der Niveauregelanlage das steuerbare Wegeventil 34 angesteuert, so dass dieses von dem in der Figur 1 gezeigten ersten Grundzustand in den zweiten Schaltzustand übergeht. Der Druckluftspeicher 4 kann dann über die Wegeventile 14 und 34 in die Atmosphäre entleert werden. Soll der Druckluftspeicher 4 nicht weiter entleert werden, so wird das steuerbare Wegeventil 34 von der Steuereinheit der Niveauregelanlage nicht weiter bestromt, so dass es wieder in den ersten gezeigten Schaltzustand übergeht.

Im Folgenden wird erläutert, wie die Luftmenge L in der Niveauregelanlage bestimmt wird, wobei sich gezeigt hat, dass es für die Durchführung des Verfahrens genügt, wenn die Luftmenge in dem Druckluftspeicher 4 und in den Luftfedern 2a bis 2d bestimmt wird. Diese Luftmenge L berechnet sich wie folgt:
L = p₁ V₁ + p₂ V₂ + p₃ V₃ + p₄ V₄ + pₛ Vₛ;
in p₁ bis p₄: Druck in den Luftfedern 2a bis 2d;
V₁ bis V₄: Volumen der Luftfedern 2a bis 2d;
pₛ: Druck im Druckluftspeicher 4;
Vₛ: Volumen des Druckluftspeichers 4.

Anhand der Luftfeder 2a wird erläutert, wie mit dem Drucksensor der Druck pi in den Luftfedern 2a - 2d bestimmt werden kann: Zunächst wird von der Steuereinheit das steuerbare Wegeventil 18 angesteuert, so dass es von dem in der Figur 1 gezeigten ersten Schaltzustand in den zweiten Schaltzustand übergeht. Die Luftfedern 2a bis 2d sind dann von dem Kompressor 6 und dem Druckluftspeicher 4 vollständig getrennt. Danach wird von der Steuereinheit der Niveauregelanlage das steuerbare Wegeventil 24a angesteuert, so dass dieses von dem in der Figur 1 gezeigten ersten Schaltzustand in den zweiten Schaltzustand übergeht. An dem Drucksensor 30 liegt dann der Druck in der Luftfeder 2a an, so dass er gemessen und an die Steuereinheit der Niveauregelanlage weitergegeben werden kann. Soll der Druck nicht weiter gemessen werden, so werden die Wegeventile 18 und 24a von der Steuereinheit nicht mehr bestromt, so dass dieses wieder in den in der Figur 1 gezeigten ersten Schaltzustand übergehen. Entsprechend kann der Druck in den Luftfedern 2b bis 2d gemessen werden.

Zur Bestimmung des Volumens V₁ in der Luftfeder 2a wird mit dem in der Luftfeder 2a zugeordneten (nicht gezeigten) Höhensensor der Einfederungszustand der Luftfeder 2a gemessen und an die Steuereinheit der Niveauregelanlage weitergegeben. In der Steuereinheit ist hinterlegt, welches Volumen der Luftfeder 2a zu dem momentanen Einfederungszustand dieser gehört, so dass aus dem übermittelten Signal des Höhensensors das Volumen der Luftfeder 2a bestimmt werden kann. Auf entsprechende Art und Weise wird das Volumen der Luftfedern 2b bis 2d festgestellt.

Zur Bestimmung des Druckes in dem Druckluftspeicher 4 nehmen die steuerbaren Wegeventile 14 und 18 zunächst den in der Figur 1 gezeigten ersten Schaltzustand ein. Der Druckluftspeicher 4 ist dann über diese mit dem Drucksensor 30 verbunden, so dass dann ein Druckausgleich zwischen dem Druckluftspeicher 4 und dem Drucksensor 30 stattfindet, wenn der Druck in dem Druckluftspeicher 4 größer ist als an dem Drucksensor 30. Danach werden die steuerbaren Wegeventile 14 und 18 von dem ersten gezeigten Schaltzustand in den zweiten Schaltzustand überführt. Der Drucksensor 30 ist dann über das steuerbare Wegeventil 14, den Kompressor 6 und das steuerbare Wegeventil 18 mit dem Druckluftspeicher 4 verbunden, so dass ein Druckausgleich zwischen dem Drucksensor 30 und dem Druckluftbehälter 4 stattfindet, wenn der Druck am Drucksensor 30 größer ist als in dem Druckluftbehälter 4. Wenn die Wegeventile 14 und 18 vor der Druckmessung also in beide Schaltzustände überführt werden, liegt am Drucksensor 30 auf jeden Fall der statische Luftdruck im Druckluftspeicher 4 an und ist somit durch diesen messbar. Der von dem Drucksensor 30 gemessene Druck wird an die Steuereinheit der Niveauregelanlage weitergegeben.

Das Volumen Vₛ des Druckluftspeichers 4 ist in der Steuereinheit der Niveauregelanlage gespeichert, so dass nunmehr alle zur Berechnung der Luftmenge L notwendigen Größen in der Steuereinheit der Niveauregelanlage vorliegen.

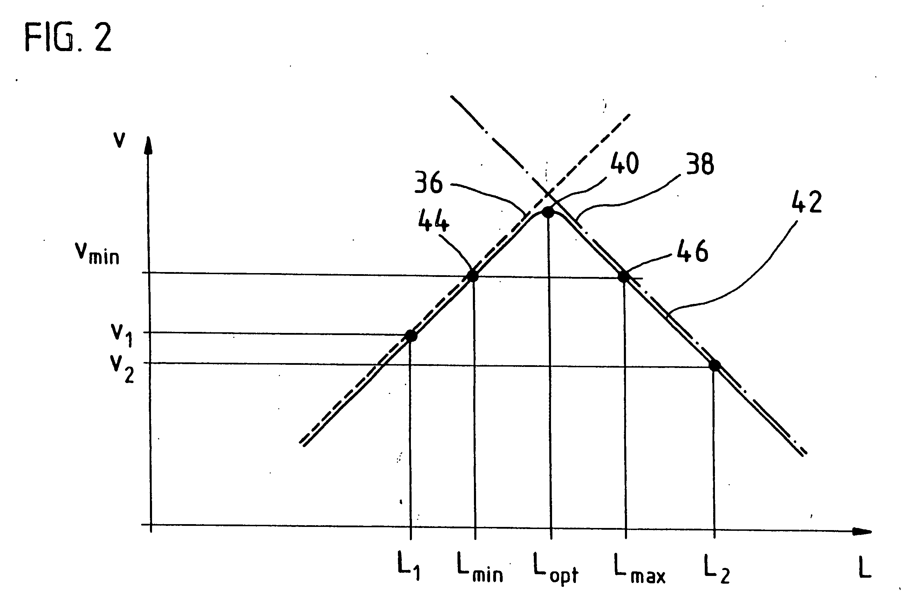

Figur 2 zeigt ein Diagramm, in dem die Regelgeschwindigkeit v über der Luftmenge L in der Niveauregelanlage aufgetragen ist. Dem Diagramm ist eine erste Gerade 36 zu entnehmen, die die Regelgeschwindigkeit v für das Anheben des Fahrzeugaufbaus aus einem bestimmten Normalniveau in Abhängigkeit von der Luftmenge L widergibt. Wenn die Luftmenge L gering ist, bedeutet dies, dass auch der Speicherdruck in dem Druckluftspeicher 4 gering ist, so dass sich eine niedrige Regelgeschwindigkeit v ergibt. Je größer die Luftmenge L ist, desto schneller kann ein Anheben des Fahrzeugaufbaus mit Hilfe der Luft aus dem Druckluftspeicher 4 erfolgen.

Die Gerade 38 gibt die Regelgeschwindigkeit v für das Absenken des Fahrzeugaufbaus mit einer vorgegebenen durchschnittlichen Beladung aus einem vorgegebenen Normalniveau in Abhängigkeit von der Luftmenge L wieder. Je niedriger die Luftmenge L ist, desto schneller kann Druckluft aus den Luftfedern 2a bis 2d zum Absenken des Fahrzeugsaufbaus den Kompressor in den Druckluftspeicher 4 überführt werden und desto schneller ist ein Absenken des Fahrzeugaufbaus möglich.

Die beiden Geraden 36 und 38 schneiden sich in einem Punkt, zu dem eine bestimmte Luftmenge Lₒₚₜ gehört. Für die Luftmengen L, die links von Lₒₚₜ liegen, geht der Absenkvorgang schneller vonstatten als der Anhebevorgang, und für diejenigen Luftmengen, die rechts von Lₒₚₜ liegen, geht das Anheben schneller vonstatten als das Absenken. Die Kurve 42 fast die Geraden 36 und 38 zusammen, wobei auf der Kurve 42 nur die jeweils langsameren Regelgeschwindigkeiten festgehalten sind (d. h. links von dem Scheitelpunkt 40, zu dem die Luftmenge Lₒₚₜ gehört, werden von der Kurve 42 die Regelgeschwindigkeiten L für das Anheben des Fahrzeugaufbaus wiedergegeben und rechts von dem Scheitelpunkt 40 werden von der Kurve 42 die Regelgeschwindigkeiten L für das Absenken des Fahrzeugaufbaus wiedergegeben).

Zieht man unterhalb des Scheitelpunktes 40 bei einer beliebig wählbaren Geschwindigkeit vₘᵢₙ eine zur L-Achse parallele Gerade, so schneidet diese Gerade die Kurve 42 in 2 Punkten 44 und 46. Liegt die Luftmenge L in der Niveauregelanlage zwischen den durch die Punkte 44 und 46 festgelegten Luftmengen Lₘᵢₙ und Lₘₐₓ, so ist sichergestellt, dass das Anheben und das Absenken des Fahrzeuges mit einer Regelgeschwindigkeit v vonstatten geht, die gleichgroß oder größer ist als die Geschwindigkeit vₘᵢₙ ist. Die durch die Punkte 44 und 46 geführte Achse legt also ein geschlossenes Luftmengenintervall von Lₘᵢₙ bis Lₘₐₓ fest, und für jede Luftmenge L innerhalb dieses Intervalls wird die gewählte Mindestregelgeschwindigkeit vₘᵢₙ für das Anheben und Absenken eingehalten bzw. überschritten (das geschlossene Luftmengenintervall von Lₘᵢₙ bis Lₘₐₓ wird im folgenden Arbeitsbereich genannt). Für Luftmengen L außerhalb des Arbeitsbereiches unterschreitet entweder die Regelgeschwindigkeit für das Anheben oder das Absenken die Mindestregelgeschwindikgeit vₘᵢₙ.

Die Luftmenge L in der Niveauregelanlage wird geregelt, in dem diese bestimmt wird und
- der Druckluftspeicher 4 mit Luft aus der Atmosphäre aufgefüllt wird, wenn die Luftmenge unterhalb der unteren Grenze Lₘᵢₙ liegt
- der Druckluftspeicher 4 in die Atmosphäre entleert wird, wenn die Luftmenge oberhalb der oberen Grenze Lₘₐₓ liegt, wobei die Regelung derart vorgenommen wird, dass die Luftmenge nach dem Auffüllen bzw. Entleeren in dem Arbeitsbereich liegt.

### Beispiele:

Für Luftmengen, die kleiner sind als die Luftmenge Lₘᵢₙ kann die Mindestregelgeschwindigkeit vₘᵢₙ für das Anheben des Fahrzeugaufbaus nicht mehr eingehalten werden. Ist die Luftmenge beispielsweise auf L₁ unterhalb von Lₘᵢₙ abgefallen, so beträgt die Regelgeschwindigkeit v für das Anheben des Fahrzeugaufbaus v₁, die kleiner ist als die Mindestregelgeschwindigkeit vₘᵢₙ. Wird bei der Bestimmung der Luftmenge in der Niveauregelanlage festgestellt, dass die Luftmenge L in der Niveauregelanlage nur noch L₁ beträgt, also kleiner ist als Lₘᵢₙ, so wird der Druckluftspeicher 4 (s. Figur 1) solange mit Luft aus der Atmosphäre aufgefüllt, bis die Luftmenge L wieder in dem Arbeitsbereich liegt.

Vorzugsweise wird das Auffüllen des Druckluftspeichers 4 solange vorgenommen, bis die Luftmenge L in der Niveauregelanlage wieder die Luftmenge Lₒₚₜ einnimmt, da diese Luftmenge Lₒₚₜ in der Mitte des Arbeitsbereiches liegt und somit die Luftmenge in der Niveauregelanlage nach dem Auffüllen die maximale Schwankungsbreite hat, bis sie wieder aus dem Arbeitsbereich herausfällt.

Die Zeitspanne, über die der Druckluftspeicher 4 aufgefüllt werden muss, kann beispielsweise wie folgt festgelegt werden: Zunächst wird die Differenz Lₒₚₜ - L₁ bestimmt. Diese Differenz legt diejenige Luftmenge L_{auf} fest, die in die Niveauregelanlage eingebracht werden muss, um von der Luftmenge L₁ zu der Luftmenge Lₒₚₜ zu kommen. Danach wird mit Hilfe des Kompressors 6 der Niveauregelanlage solange Luft aus der Atmosphäre in den Druckluftspeicher 4 überführt, bis die Luftmenge L_{auf} in den Druckluftspeicher 4 überführt worden ist (bezüglich des Auffüllens des Druckluftspeichers mit Hilfe des Kompressors 6 s. Figur 1). Die erforderliche Zeitspanne kann aus einer in der Steuereinheit der Niveauregelanlage hinterlegten Kennlinie bestimmt werden, die für alle in der Niveauregelanlage denkbaren Luftmengen L_{auf} (L_{auf} ist maximal Lₒₚₜ (wenn die Niveauregelanlage nämlich vor dem Auffüllen leer war) und minimal O (wenn nämlich die Luftmenge in der Niveauregelanlage Lₒₚₜ entspricht)) den Zusammenhang zwischen der durch den Kompressor jeweils zu fördernden Luftmenge L_{auf} und der Kompressorlaufzeit wiedergibt.

Wird bei Bestimmung der Luftmenge in der Niveauregelanlage festgestellt, dass die tatsächliche Luftmenge L₂ in der Niveauregelanlage größer ist als die Luftmenge Lₘₐₓ, so bedeutet dies, dass das Absenken des Fahrzeugaufbaus mit einer Regelgeschwindigkeit v₂ erfolgt, die kleiner ist als die Mindestregelgeschwindigkeit vₘᵢₙ. In diesem Fall wird solange Druckluft aus dem Druckluftspeicher 4 abgelassen, bis die in der Niveauregelanlage vorhandene Druckluft wieder in dem Arbeitsbereich liegt. Vorzugsweise wird solange Druckluft aus dem Druckluftspeicher 4 abgelassen, bis die tatsächliche Luftmenge L in der Niveauregelanlage der Luftmenge Lₒₚₜ entspricht (zur Begründung s. oben). Die Zeitspanne, über die Druckluft abgelassen werden muss, kann hierbei wie folgt bestimmt werden: Zunächst wird die Differenz L₂ - Lₒₚₜ bestimmt. Diese Differenz gibt diejenige Luftmenge L_{ab} an, die aus der Niveauregelanlage abgelassen werden muss, um von der Luftmenge L₂ zu der Luftmenge Lₒₚₜ zu kommen. Danach wird solange Druckluft aus dem Druckluftspeicher 4 abgelassen bis die Luftmenge L_{ab} entwichen ist (wie dies geschieht, ist im Zusammenhang mit der Figur 1 beschrieben). Die erforderliche Zeitspanne kann aus einer in der Steuereinheit der Niveauregelanlage hinterlegten Kennlinie festgestellt werden, die für alle in der Niveauregelanlage denkbaren Luftmengen L_{ab} den Zusammenhang zwischen der jeweils abzulassenden Luftmenge L_{ab} und die dafür benötigte Ablasszeit wiedergibt.

Durch das oben erläuterte Verfahren wird erreicht, dass die tatsächliche Luftmenge L in der Niveauregelanlage auf die Luftmenge Lₒₚₜ gebracht wird, nachdem die tatsächliche Luftmenge in der Niveauregelanlage außerhalb des Arbeitsbereiches gelegen hat.

Liegt die tatsächliche Luftmenge L in dem Arbeitsbereich, so kann es vorkommen, dass aufgrund von Temperaturschwankungen über eine bestimmte Zeitdauer diese Luftmenge L variiert, ohne dass die Niveauregelanlage eine Leckage aufweist. Würde also durch diese üblichen Temperaturschwankungen die Luftmenge L außerhalb des Arbeitsbereiches zu liegen kommen, so würde dies zu Regelvorgängen in der Niveauregelanlage führen, obwohl dies an sich nicht nötig ist. Um dem vorzubeugen, wird der Arbeitsbereich so groß gewählt, dass die sich aufgrund der Temperaturschwankungen innerhalb einer festgelegten Zeitdauer variierende Luftmenge L möglichst immer innerhalb des Arbeitsbereiches liegt. Als Zeitraum für die Temperaturschwankungen kann beispielsweise die Dauer eines Tages angenommen werden und für die Größe der Temperaturschwankung kann beispielsweise ein Bereich von - 20 °C bis + 20 °C festgelegt werden.

### Bezugszeichenliste

(ist Teil der Beschreibung)
- 2a, ..., 2d: Luftfeder
- 4: Druckluftspeicher
- 6: Kompressor
- 8: Eingang des Kompressors
- 10: Ausgang des Kompressors
- 14: steuerbares Wegeventil
- 18: steuerbares Wegeventil
- 24a, ..., 24d: steuerbare Wegeventile
- 30: Drucksensor
- 34: steuerbares Wegeventil
- 36: Gerade
- 38: Gerade
- 40: Scheitelpunkt
- 42: Kurve
- 44: Punkt
- 46: Punkt

## Patentansprüche

1. Verfahren zur Regelung des Speicherdruckes des Druckluftspeichers (4) einer geschlossenen Niveauregelanlage für ein Kraftfahrzeug, die folgende Bestandteile enthält:
- einen Kompressor (6),
- einen Druckluftspeicher (4), der mit Luft aus der Atmosphäre befüllbar und der in die Atmosphäre entleerbar ist
- mindestens eine Luftfeder (2a - 2d), wobei die Luftfeder (2a - 2d) über den Kompressor (6) mit dem Druckluftspeicher (4) derart in Verbindung steht, dass Druckluft aus der Luftfeder (2a - 2d) in den Druckluftspeicher (4) und in die umgekehrte Richtung überführbar ist
**dadurch gekennzeichnet, dass** der Speicherdruck des Druckluftspeichers (4) indirekt über die Luftmenge in der Niveauregelanlage geregelt wird, indem diese bestimmt wird und
- der Druckluftspeicher (4) mit Luft aus der Atmosphäre aufgefüllt wird, wenn die Luftmenge unterhalb einer unteren Grenze liegt
- der Druckluftspeicher (4) in die Atmosphäre entleert wird, wenn die Luftmenge oberhalb einer oberen Grenze liegt, wobei die Regelung derart vorgenommen wird, dass die Luftmenge nach dem Auffüllen bzw. Entleeren in einem Arbeitsbereich zwischen der unteren und der oberen Grenze liegt.

2. Verfahren nach Anspruch 1, **dadurch gekennzeichnet, dass** die Luftmenge in der Niveauregelanlage aus der Summe der Luftmengen in den Luftfedern (2a - 2d) und der Luftmenge in dem Druckluftspeicher (4) bestimmt wird.

3. Verfahren nach einem der Ansprüche 1 bis 2, **dadurch gekennzeichnet, dass** der Druckluftspeicher (4) derart aufgefüllt oder entleert wird, dass die Luftmenge nach dem Auffüllen oder Entleeren zumindest nahe der Mitte des Arbeitsbereiches liegt.

4. Verfahren nach einem der Ansprüche 1 bis 3, **dadurch gekennzeichnet, dass**
- die Luftmenge in der Niveauregelanlage bestimmt wird
- die bestimmte Luftmenge von einer vorgegebenen Luftmenge, die innerhalb des Arbeitsbereiches liegt, abgezogen wird
- aus der Differenz wird eine Zeitspanne bestimmt, über die der Druckluftspeicher (4) aufgefüllt oder entleert werden muß, um von der bestimmten Luftmenge zu der vorgegebenen Luftmenge zu kommen
- der Druckluftspeicher (4) wird über die bestimmte Zeitspanne aufgefüllt oder entleert.

5. Verfahren nach einem der Ansprüche 1 bis 4, **dadurch gekennzeichnet, dass** der Arbeitsbereich so gewählt wird, dass die Luftmenge in der Niveauregelanlage auch bei Temperaturschwankungen im Laufe eines längeren Zeitraumes zumindest meistens innerhalb des Arbeitsbereiches liegt.

6. Verfahren nach einem der Ansprüche 1 bis 5, **dadurch gekennzeichnet, dass** die Luftmenge in der Niveauregelanlage bei Inbetriebnahme des Kraftfahrzeuges bestimmt wird.

7. Verfahren nach einem der Ansprüche 1 bis 6, **dadurch gekennzeichnet, dass**
- jeweils über einen langen Zeitraum der Mittelwert aus den während des Zeitraumes bestimmten Luftmengen gebildet wird
- ein so bestimmter Mittelwert mit mindestens einem zuvor entsprechend bestimmten Mittelwert verglichen wird, und
- bei einem Sinken des Mittelwertes auf eine Undichtigkeit der Niveauregelanlage geschlossen wird.

8. Verfahren nach einem der Ansprüche 1 bis 7, **dadurch gekennzeichnet, dass** der Mittelwert des Arbeitsbereiches ausgehend von einer bestimmten Umgebungstemperatur, einem bestimmten Beladungszustandes, eines bestimmten Normalniveaus des Fahrzeugaufbaus und bestimmten Mindestregelzeiten für das Anheben bzw. Absenken des Fahrzeugaufbaus aus dem Normalniveau in andere bestimmte Niveaus festgelegt wird.

## Claims

1. Method for controlling the accumulator pressure of the compressed air accumulator (4) of an enclosed ride level control system for a motor vehicle, which contains the following components:
- a compressor (6),
- a compressed air accumulator (4) which can be filled with air from the atmosphere and which can be emptied into the atmosphere,
- at least one air spring (2a-2d), the air spring (2a-2d) being connected via the compressor (6) to the compressed air accumulator (4) in such a way that compressed air from the air spring (2a-2d) can be transferred into the compressed air accumulator (4) and in the opposite direction,
**characterized in that** the accumulator pressure of the compressed air accumulator (4) is controlled indirectly by means of the quantity of air in the ride level control system by determining the latter and
- the compressed air accumulator (4) is filled with air from the atmosphere when the quantity of air is below a lower limit,
- the compressed air accumulator (4) is emptied into the atmosphere if the quantity of air is above an upper limit, the control being performed in such a way that the quantity of air after the filling or emptying process is in a working range between the lower and upper limits.

2. Method according to Claim 1, **characterized in that** the quantity of air in the ride level control system is determined from the sum of the quantities of air in the air springs (2a-2d) and the quantity of air in the compressed air accumulator (4).

3. Method according to one of Claims 1 to 2, **characterized in that** the compressed air accumulator (4) is filled or emptied in such a way that the quantity of air after the filling or emptying process is at least near to the centre of the working range.

4. Method according to one of Claims 1 to 3, **characterized in that**
- the quantity of air in the ride level control system is determined,
- the quantity of air which is determined is subtracted from a predefined quantity of air which is within the working range,
- a time period over which the compressed air accumulator (4) has to be filled or emptied in order to change from the quantity of air which is determined to the predefined quantity of air is determined from the difference,
- the compressed air accumulator (4) is filled or emptied over the time period which is determined.

5. Method according to one of Claims 1 to 4, **characterized in that** the working range is selected in such a way that the quantity of air in the ride level control system is at least usually within the working range over the course of a relatively long time period even when there are temperature fluctuations.

6. Method according to one of Claims 1 to 5, **characterized in that** the quantity of air in the ride level control system is determined when the motor vehicle is actuated.

7. Method according to one of Claims 1 to 6, **characterized in that**
- the mean value is formed in each case over a relatively long time period from the quantities of air which are determined during the time period,
- the mean value which is determined in this way is compared with at least one previously correspondingly determined mean value, and
- if the mean value drops it is concluded that the ride level control system is not sealed.

8. Method according to one of Claims 1 to 7, **characterized in that** the mean value of the working range is defined starting from an ambient temperature which is determined, a load state which is determined, a normal ride level of the vehicle body which is determined and minimum control times which are determined for the raising or lowering of the vehicle body from the normal ride level into other ride levels which are determined.

## Revendications

1. Procédé pour réguler la pression d'accumulation de l'accumulateur d'air comprimé (4) d'un équipement fermé de régulation de niveau pour un véhicule automobile, lequel comprend les composants suivants :
- un compresseur (6),
- un accumulateur d'air comprimé (4) qui peut être rempli d'air en provenance de l'atmosphère et qui peut être vidé dans l'atmosphère,
- au moins un amortisseur pneumatique (2a - 2d), l'amortisseur pneumatique (2a - 2d) étant en liaison avec l'accumulateur d'air comprimé (4) par le biais du compresseur (6) de telle sorte que de l'air comprimé peut être acheminé de l'amortisseur pneumatique (2a - 2d) vers l'accumulateur d'air comprimé (4) et en sens inverse
**caractérisé en ce que** la pression d'accumulation de l'accumulateur d'air comprimé (4) est régulée indirectement par le biais de la quantité d'air dans l'équipement de régulation de niveau en déterminant celle-ci et
- l'accumulateur d'air comprimé (4) est rempli d'air en provenance de l'atmosphère lorsque la quantité d'air est inférieure à un seuil inférieur
- l'accumulateur d'air comprimé (4) est vidé dans l'atmosphère lorsque la quantité d'air est supérieure à un seuil supérieur, la régulation étant effectuée de telle sorte que la quantité d'air après le remplissage ou le vidage se trouve dans une plage de fonctionnement entre les seuils inférieur et supérieur.

2. Procédé selon la revendication 1, **caractérisé en ce que** la quantité d'air dans l'équipement de régulation de niveau est déterminée à partir de la somme des quantités d'air dans les amortisseurs pneumatiques (2a - 2d) et de la quantité d'air dans l'accumulateur d'air comprimé (4).

3. Procédé selon l'une des revendications 1 à 2, **caractérisé en ce que** l'accumulateur d'air comprimé (4) est rempli ou vidé de telle sorte que la quantité d'air, après le remplissage ou le vidage, se trouve au moins à proximité du centre de la plage de fonctionnement.

4. Procédé selon l'une des revendications 1 à 3, **caractérisé en ce que**
- la quantité d'air dans l'équipement de régulation de niveau est déterminée,
- la quantité d'air déterminée est soustraite d'une quantité d'air prédéfinie qui se trouve dans la plage de fonctionnement,
- à partir de la différence est déterminé un intervalle de temps pendant lequel il faut remplir ou vider l'accumulateur d'air comprimé (4) pour parvenir de la quantité d'air déterminée à la quantité d'air prédéfinie,
- l'accumulateur d'air comprimé (4) est rempli ou vidé pendant l'intervalle de temps déterminé.

5. Procédé selon l'une des revendications 1 à 4, **caractérisé en ce que** la plage de fonctionnement est choisie de telle sorte que la quantité d'air dans l'équipement de régulation de niveau se trouve au moins en majorité à l'intérieur de la plage de fonctionnement au cours d'une longue période, et ce même en cas de fluctuations de la température.

6. Procédé selon l'une des revendications 1 à 5, **caractérisé en ce que** la quantité d'air dans l'équipement de régulation de niveau est déterminée lors de la mise en service du véhicule automobile.

7. Procédé selon l'une des revendications 1 à 6, **caractérisé en ce que**
- la valeur moyenne des quantités d'air déterminées pendant une longue période est à chaque fois calculée sur cette période,
- une valeur moyenne ainsi déterminée est comparée avec au moins une valeur moyenne correspondante déterminée précédemment et
- une chute de la valeur moyenne amène à conclure à un défaut d'étanchéité de l'équipement de régulation de niveau.

8. Procédé selon l'une des revendications 1 à 7, **caractérisé en ce que** la valeur moyenne de la plage de fonctionnement est fixée à partir d'une température ambiante donnée, d'une situation de charge donnée, d'un niveau normal donné de la carrosserie du véhicule et de temps de régulation minimums donnés pour le levage ou la descente de la carrosserie du véhicule depuis le niveau normal jusqu'à d'autres niveaux donnés.
